# FASCICULE DE BREVET EUROPEEN

(11) **EP 3 574 240 B1**
(45) Date de publication et mention de la délivrance du brevet: **06.01.2021**
(21) Numéro de dépôt: 17817802.6
(22) Date de dépôt: 30.11.2017
(51) Int. Cl.: F16K 15/06, F16L 39/00, F16K 17/04, G01M 3/00, F16L 59/14

(54) **PIÈCE DE JONCTION À BRIDE DE LIMITATION DE PROPAGATION D'ÉCRASEMENT COMPRENANT UNE SOUPAPE DE PRESSION DIFFÉRENTIELLE POUR CONDUITE SOUS-MARINE DE TRANSPORT DE FLUIDES**
VERBINDER MIT FLANSCH ZUR BEGRENZUNG DER KNICKAUSBREITUNG MIT EINEM DIFFERENZDRUCKVENTIL FÜR UNTERWASSERFLÜSSIGKEITSTRANSPORTROHR
CONNECTOR WITH FLANGE FOR LIMITING BUCKLE PROPAGATION COMPRISING A DIFFERENTIAL PRESSURE VALVE FOR UNDERWATER FLUID-TRANSPORT PIPE

(30) Priorité: 25.01.2017 FR 1750597
(43) Date de publication de la demande: 04.12.2019
(73) Titulaire: SAIPEM S.A., 78180 Montigny-le-Bretonneux (FR)
(72) Inventeur: PIONETTI, François-Régis, 50450 La Baleine (FR)
(74) Mandataire: Cabinet Beau de Loménie
(86) Numéro de dépôt international: PCT/FR2017/053325
(87) Numéro de publication internationale: WO 2018/138419

(56) Documents cités:
- WO-A1-01/81803
- WO-A1-2014/162027
- DE-A1- 3 544 084
- US-A- 1 785 271
- US-A- 4 349 043

## Description

### Arrière-plan de l'invention

La présente invention se rapporte au domaine général des conduites sous-marines reposant au fond de la mer ou assurant la liaison fond-surface pour le transport d'hydrocarbures, par exemple de pétrole et de gaz, issus de puits de production sous-marins.

Elle concerne plus précisément une pièce de jonction comprenant une soupape de pression différentielle équipant les conduites sous-marines (à simple ou double enveloppe) qui sont munies d'un chemisage interne en matière plastique pour le transport d'hydrocarbures.

Les conduites sous-marines de transport d'hydrocarbures, à simple ou double enveloppe, peuvent être recouvertes sur leur surface interne par un chemisage annulaire renfermant les fluides d'hydrocarbures sous pression à transporter. Généralement, ce chemisage est réalisé en matière plastique, fabriqué par exemple à base de polyéthylène, de nylon et de polymères fluorés.

La durée de vie d'un tel chemisage dépend notamment de la vitesse à laquelle le plastique qui le constitue se dégrade par réaction chimique au contact des composés du flux d'hydrocarbures transportés. Pour des fluides à basses températures ou contenant peu de molécules d'eau, un plastique à base de polyéthylène haute densité (PE-HD) et de nylon peut être utilisé. Pour des fluides à températures plus élevées ou contenant plus d'eau, un plastique plus stable thermiquement est requis. Dans ce cas, on pourra recourir à des polymères fluorés, tels que du polyfluorure de vinylidène (acronyme anglais : PVDF pour « PolyVinyliDene Fluoride »).

Par ailleurs, les chemisages internes équipant les conduites sous-marines sont perméables aux hydrocarbures de faible masse moléculaire. Aussi, en production, un flux continu de gaz (appelé gaz de perméation) se diffuse au travers du chemisage et remplit l'espace annulaire formé entre le chemisage et la surface interne de la conduite. Le débit du gaz de perméation se diffusant de la sorte au travers du chemisage dépend de nombreux facteurs, et en particulier du coefficient de perméabilité du plastique constituant le chemisage, ce coefficient de perméabilité résultant directement de la composition du plastique utilisé.

Les gaz de perméation peuvent s'accumuler dans l'espace annulaire entre le chemisage et la paroi interne de la conduite. Or, dans cette situation, suite à une dépressurisation rapide de la conduite, le risque est important que le chemisage ne s'affaisse sur lui-même. Il est donc nécessaire d'évacuer ces gaz hors de l'espace annulaire dans lequel ils se diffusent. A cet effet, il est connu d'installer aux extrémités de la conduite des soupapes de pression différentielle, ces soupapes s'ouvrant d'un côté dans l'espace annulaire formé entre le chemisage et la conduite et débouchant d'un côté opposé vers le milieu ambiant, à savoir l'eau de mer. Lorsque la pression à l'intérieur de l'espace annulaire formé entre le chemisage et la conduite dépasse un seuil prédéterminé, typiquement de l'ordre de 1 à 5 bars au-dessus de la pression hydrostatique locale, les soupapes s'ouvrent et permettent aux gaz de perméation d'être évacués à l'extérieur de la conduite, dans la mer.

On pourra se référer au document WO 99/56045 qui décrit un exemple d'architecture d'une soupape de pression différentielle utilisée pour évacuer les gaz de perméation d'une conduite flexible sous-marine. Cette soupape comprend notamment un double clapet, ce qui la rend assez complexe à réaliser. Par ailleurs, dans ce document, de simples bulles de gaz constituent l'unique barrière à la pénétration d'eau et de particules solides dans la chambre de la soupape. Or, une telle barrière est relativement peu étanche. On connaît du document WO 2014/162027 une conduite pour l'acheminement de fluides, constituée d'au moins deux couches entre lesquelles sont disposés des moyens destinés à collecter les éventuelles fuites du fluide transporté par la couche interne, et à les conduire jusqu'à un dispositif de détection de la présence dudit fluide.

### Objet et résumé de l'invention

La présente invention a donc pour but principal de proposer une soupape de pression différentielle qui ne présente pas de tels inconvénients.

Conformément à l'invention, ce but est atteint grâce à une pièce de jonction selon la revendication 1 comprenant au moins une soupape de pression différentielle pour conduite sous-marine de transport de fluides, la soupape comprenant :
un corps de soupape à l'intérieur duquel est ménagée une chambre interne s'ouvrant d'un côté vers la conduite à l'intérieur de laquelle règne une pression interne Pi et débouchant d'un autre côté vers l'extérieur où règne une pression extérieure Pe ;
un piston disposé dans la chambre interne de façon à départager la chambre interne en une chambre d'admission communiquant avec l'intérieur de la conduite et une chambre de refoulement communiquant avec l'extérieur, le piston étant mobile entre une position d'ouverture dans laquelle les chambres d'admission et de refoulement communiquent entre elles et une position de fermeture dans laquelle les chambres d'admission et de refoulement sont étanches l'une par rapport à l'autre ;
une vis de tarage vissée dans le corps de soupape et comprenant un alésage à l'intérieur duquel coulisse une tige du piston et au moins un perçage débouchant dans la chambre de refoulement et s'ouvrant vers l'extérieur ; et
un ressort positionné entre le piston et la vis de tarage, ledit ressort étant taré de sorte à maintenir le piston en position de fermeture en-dessous d'une pression de seuil prédéterminée à l'intérieur de la chambre d'admission.

Les gaz de perméation présents à l'intérieur de l'espace annulaire entre le chemisage et la paroi interne de la conduite se diffusent au travers du chemisage de la conduite et pénètrent dans la chambre d'admission de la soupape. Lorsque la pression à l'intérieur de la chambre d'admission dépasse la pression de seuil prédéterminée (correspondant typiquement à une différence de pression avec la pression extérieure Pe de l'ordre de 1 à 5 bars), le piston de la soupape s'ouvre permettant aux gaz de perméation de pénétrer dans la chambre de refoulement pour être évacués vers l'extérieur de la conduite. De plus, la vis de tarage qui vient se visser dans le corps de soupape permet de régler le tarage du ressort et ainsi de modifier la pression de seuil à partir de laquelle le piston s'ouvre pour évacuer les gaz de perméation. La soupape selon l'invention présente ainsi une conception extrêmement simple, ce qui la rend fiable et aisée à fabriquer.

De préférence, les perçages de la vis de tarage débouchent vers l'extérieur au travers d'un filtre destiné à retenir des impuretés provenant de l'extérieur. La présence d'un tel filtre permet d'éviter le passage d'impuretés depuis l'extérieur, notamment de sable lorsque la conduite repose au fond de la mer, vers l'intérieur de la soupape.

Dans ce cas, le filtre débouche avantageusement vers l'extérieur au travers d'une membrane maintenue en position à l'aide d'un ressort travaillant en compression. Une telle membrane permet de laisser passer l'eau de mer contenue dans le filtre tout en retenant les sels de l'eau de mer et autres poussières afin d'éviter que ces derniers ne pénètrent à l'intérieur de la chambre de la soupape.

La chambre d'admission peut communiquer avec l'intérieur de la conduite par l'intermédiaire d'une canalisation. Dans ce cas, la canalisation débouche de préférence à une extrémité dans la chambre d'admission et s'ouvre à une extrémité opposée à l'intérieur de la conduite par l'intermédiaire d'une crépine. La présence d'une telle crépine permet de retenir les poussières et les particules d'acier présentes dans l'espace annulaire qui pourraient être entraînés par les gaz de perméation lors de leur évacuation à travers la soupape.

L'invention a également pour objet une pièce de jonction pour conduite sous-marine de transport de fluides, comprenant une bague destinée à venir se raccorder à des extrémités de deux éléments unitaires de conduite, une bride de limitation de propagation d'écrasement faisant saille radialement vers l'extérieur depuis la bague, et au moins trois soupapes de pression différentielle telles que définies précédemment, les soupapes étant positionnées radialement au sein de la bride.

La chambre interne de chaque soupape peut s'ouvrir d'un côté à l'intérieur de la bague et débouche d'un autre côté vers l'extérieur de la bride. Plus précisément, la chambre interne de chaque soupape peut s'ouvrir d'un côté à l'intérieur de la bague au travers d'un chemisage en matière plastique.

De préférence, les soupapes sont régulièrement espacées les unes des autres autour d'un axe de révolution de la bride. Une telle disposition permet de garantir qu'au moins une soupape ne débouche pas sur le fond marin sur lequel repose en fonctionnement la bride.

Dans le cas d'une pièce de jonction pour conduite sous-marine à double enveloppe, la bague est une bague interne destinée à venir se raccorder à des extrémités de deux éléments unitaires d'une enveloppe interne de conduite, la pièce de jonction comprenant en outre une bague externe disposée autour de la bague interne en lui étant coaxiale et destinée à venir se raccorder à des extrémités de deux éléments unitaires d'une enveloppe externe de conduite, la bride faisant saillie radialement vers l'extérieur depuis la bague externe.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'une pièce de jonction pour conduite sous-marine à double enveloppe munie de soupapes de pression différentielle selon l'invention ;
- la figure 2 est une vue en coupe longitudinale de la pièce de jonction de la figure 1 ;
- la figure 3 est une vue en coupe transversale et en situation de la pièce de jonction de la figure 1;
- la figure 4 est une vue en coupe longitudinale de l'une des soupapes des figures 1 à 3 ; et
- la figure 5 est une vue en perspective d'une pièce de jonction pour conduite sous-marine à simple enveloppe munie de soupapes de pression différentielle selon l'invention.

### Description détaillée de l'invention

L'invention s'applique à toutes les conduites sous-marines reposant au fond de la mer ou assurant la liaison fond-surface pour le transport d'hydrocarbures, ces conduites pouvant être à simple enveloppe ou à double enveloppe.

L'invention s'applique plus particulièrement aux conduites sous-marines pour lesquelles les fluides d'hydrocarbures sous pression à transporter sont confinés dans un chemisage en matière plastique, ce chemisage étant perméable aux hydrocarbures de faible masse moléculaire qui forment un flux de gaz de perméation à évacuer à l'extérieur de la conduite (typiquement ces gaz de perméation comprennent du H₂S, du CO₂, duCH₄, et sont mélangés à de l'eau).

Pour évacuer ces gaz de perméation, l'invention propose une soupape de pression différentielle qui vient équiper de telles conduites sous-marines.

Selon une disposition avantageuse de l'invention, de telles soupapes de pression différentielle sont positionnées au niveau des pièces de jonction qui sont typiquement destinées à assurer une jonction entre deux éléments unitaires de conduite. De telles pièces de jonction sont généralement des pièces de raccordement forgées en acier. Un exemple de réalisation de ces pièces de jonction est notamment décrit dans le document WO 2011/007075.

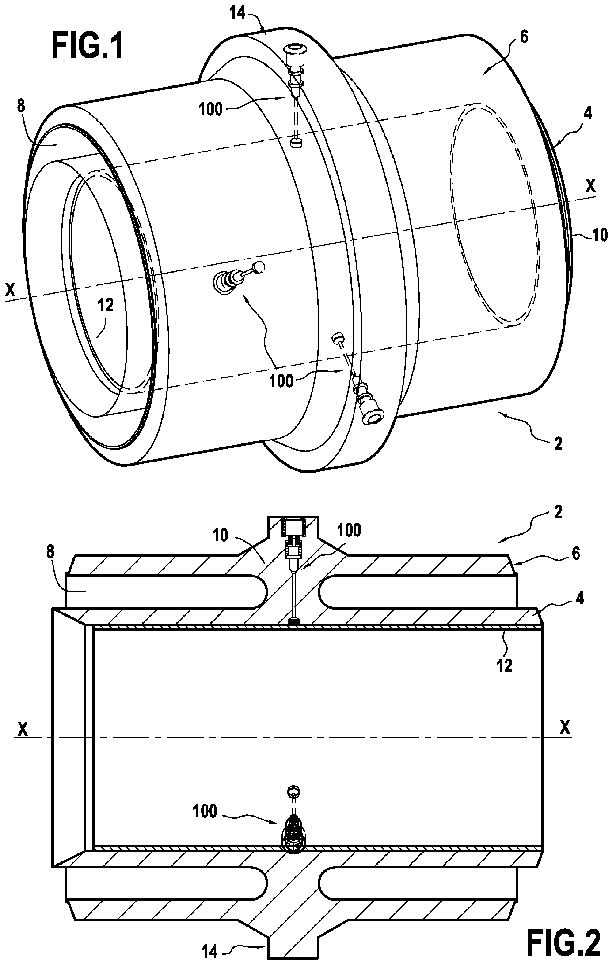

Les figures 1 et 2 illustrent, en perspective et en coupe longitudinale, un exemple de réalisation d'une pièce de jonction 2 pour raccorder entre deux sections d'une conduite à double enveloppe.

Dans cet exemple de réalisation non limitatif, la conduite sous-marine est une conduite à double enveloppe qui est formée par l'assemblage d'une pluralité de sections de conduite entre elles, chaque section de conduite comprenant un élément unitaire d'enveloppe interne et un élément unitaire d'enveloppe externe coaxial au précédent.

De façon connue, la pièce de jonction 2 est une pièce de révolution centrée sur un axe de révolution X-X. Elle comprend notamment une bague interne 4 qui est destinée à venir se raccorder à des extrémités de deux éléments unitaires d'une enveloppe interne de la conduite à double enveloppe, et une bague externe 6 qui est disposée autour de la bague interne 4 en lui étant coaxiale et qui est destinée à venir se raccorder à des extrémités de deux éléments unitaires d'une enveloppe externe de ladite conduite. L'espace annulaire 8 délimité entre les bagues interne et externe peut contenir un matériau d'isolation (non représenté sur les figures).

Les bagues interne et externe présentent des diamètres correspondant sensiblement aux diamètres respectifs des éléments unitaires d'enveloppe interne et externe sur lesquels ils sont assemblés par soudage. De plus, ces bagues se raccordent l'une à l'autre au niveau d'une partie centrale annulaire 10.

La pièce de jonction 2 comprend également un chemisage annulaire 12 en matière plastique qui recouvre la surface interne de la bague interne 4, ce chemisage recevant les fluides d'hydrocarbures sous pression à transporter. De façon connue, le chemisage est fabriqué dans un matériau plastique pouvant contenir du polyéthylène, du nylon et des polymères fluorés.

Au niveau de la partie centrale 10, la pièce de jonction 2 comprend en outre une bride de limitation de propagation d'écrasement 14 qui fait saillie radialement vers l'extérieur depuis la bague externe 6. Au niveau de la conduite dans son ensemble, les différentes brides 14 forment des surépaisseurs locales à intervalles réguliers le long de la conduite qui servent à limiter le risque d'une propagation d'un écrasement de la conduite sous l'effet des instabilités de forme des sections de conduite entraînées par la pression hydrostatique extérieure de l'eau de mer.

La bride 14 constitue ainsi un dispositif limiteur de propagation d'écrasement (appelé « buckle arrestor » en anglais). De façon connue, grâce à ces dispositifs, en cas d'amorce et de propagation d'écrasement de la conduite, celui-ci reste limité à l'intervalle entre les deux brides qui encadrent l'amorce d'écrasement.

La bride de limitation de propagation d'écrasement 14 de la pièce de jonction est munie de soupapes de pression différentielle 100 selon l'invention qui sont destinées chacune à assurer une évacuation vers l'extérieur des gaz de perméation se diffusant au travers du chemisage 12.

Plus précisément, les soupapes de pression différentielle 100 s'étendent chacune dans le sens de leur longueur selon une direction radiale D par rapport à la pièce de jonction et s'ouvrent à l'intérieur de la bague interne 4 de la pièce de jonction dans un même plan transversal à cette pièce de jonction.

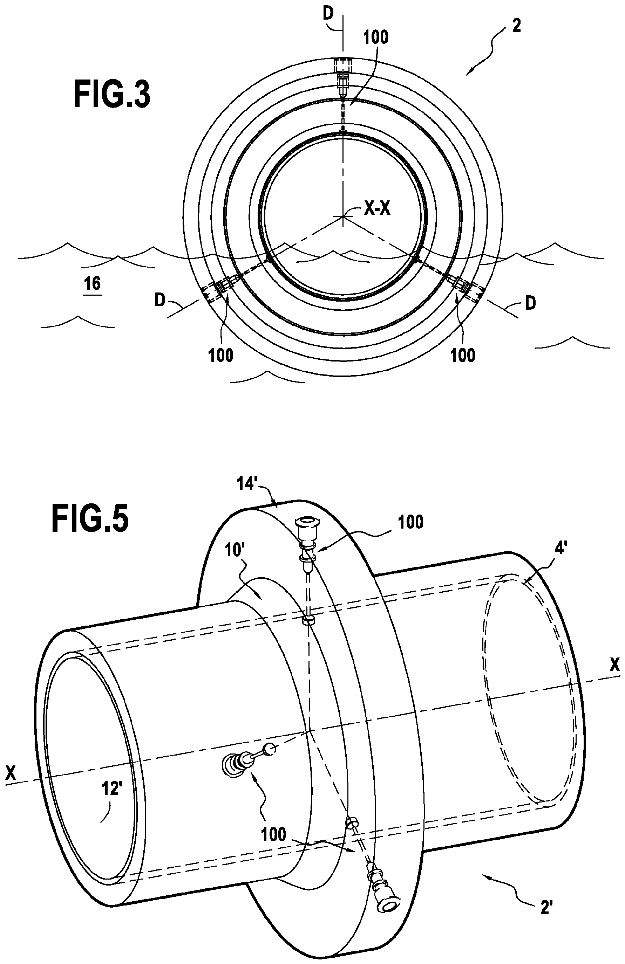

De plus, comme représenté sur la figure 3, les soupapes de pression différentielle sont au moins trois et sont de préférence régulièrement réparties autour de l'axe de révolution X-X de la pièce de jonction. Un tel espacement de 120° entre les soupapes permet de faire en sorte d'avoir toujours au moins une soupape qui débouche dans le milieu ambiant, à savoir l'eau de mer, même si les deux autres soupapes sont ensablées dans le fond marin 16 comme représenté sur la figure 3.

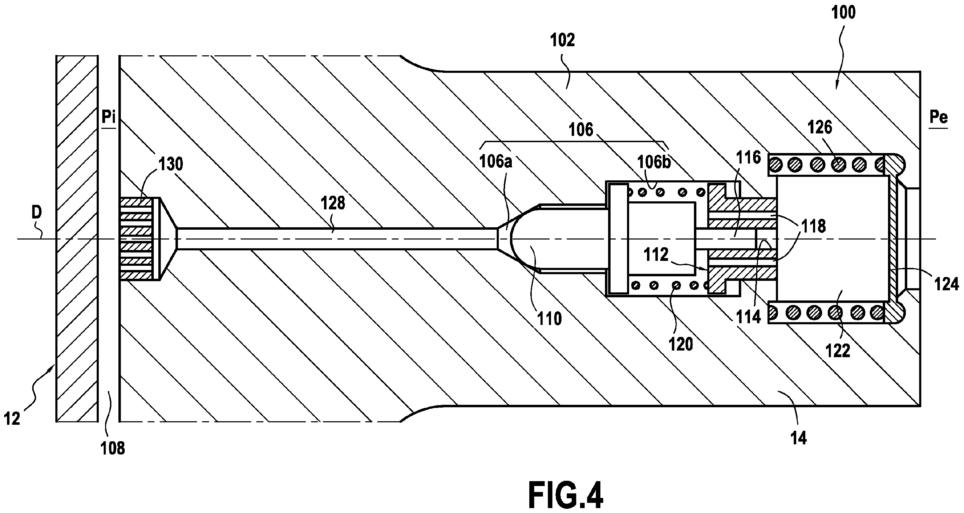

En liaison avec la figure 4, on décrira maintenant l'architecture de la soupape de pression différentielle 100 selon l'invention.

Cette soupape comprend notamment un corps de soupape 102 qui est formé par la bride 14 de la pièce de jonction et à l'intérieur duquel est ménagée une chambre interne 106. Cette chambre interne s'ouvre d'un côté dans l'intervalle annulaire 108 ménagé entre la surface interne de la bague interne 4 et le chemisage 12 et à l'intérieur duquel règne une pression interne Pi. Du côté opposé, la chambre interne débouche vers l'extérieur, c'est-à-dire dans le milieu ambiant (i.e. la mer) où règne une pression extérieure Pe.

Un piston 110 est disposé dans la chambre interne 106 de façon à départager celle-ci en une chambre d'admission 106a communiquant avec l'intervalle annulaire 108 et une chambre de refoulement 106b communiquant avec l'extérieur.

Le piston 110 est entre deux positions extrêmes, à savoir une position d'ouverture dans laquelle les chambres d'admission 106a et de refoulement 106b communiquent entre elles, et une position de fermeture représentée par la figure 4 et dans laquelle les chambres d'admission et de refoulement sont étanches l'une par rapport à l'autre.

Dans sa position de fermeture, le piston 110 dont l'extrémité est arrondie repose sur un siège de forme tronconique de sorte à assurer une parfaite étanchéité entre les chambres d'admission et de refoulement tout en évitant tout risque de blocage du piston.

La soupape comprend également une vis de tarage 112 qui est vissée dans le corps de soupape. Cette vis de tarage comprend un alésage 114 à l'intérieur duquel coulisse la tige 116 du piston 110, ainsi qu'un ou plusieurs perçages 118 débouchant dans la chambre de refoulement 106b et s'ouvrant vers l'extérieur.

La soupape comprend encore un ressort 120 qui est positionné entre le piston 110 et la vis de tarage 112, ce ressort étant taré de sorte à maintenir le piston en position de fermeture en-dessous d'une pression de seuil Ps prédéterminée à l'intérieur de la chambre d'admission 106a. Le réglage de cette pression de seuil s'effectue en vissant ou dévissant plus ou moins la vis de tarage 112.

De préférence, les perçages 118 de la vis de tarage 112 débouchent vers l'extérieur au travers d'un filtre 122 qui permet de retenir les impuretés provenant de l'extérieur. Ainsi, le filtre 122 évite le passage d'impuretés depuis l'extérieur, notamment de sable lorsque la conduite repose au fond de la mer, vers l'intérieur de la soupape. En revanche, le filtre est perméable aux gaz de perméation (dont H₂S, CO₂, CH₄) et à l'eau.

De préférence également, le filtre 122 débouche vers l'extérieur au travers d'une membrane 124 qui est maintenue en position à l'aide d'un ressort 126 travaillant en compression. Dans l'exemple représenté sur la figure 4, le ressort 126 est monté autour du filtre 122. Cette membrane 124 permet de laisser les gaz de perméation et l'eau tout en retenant les sels de l'eau de mer et autres poussières afin d'éviter que ces derniers ne pénètrent à l'intérieur de la chambre de la soupape.

Du côté opposé de la soupape, la chambre d'admission 106a communique avec l'intérieur de l'intervalle annulaire 108 ménagé entre la surface interne de la bague interne 4 et le chemisage 12 par l'intermédiaire d'une canalisation 128.

Cette canalisation 128 est plus précisément raccordée à une crépine 130 au niveau de son extrémité débouchant dans l'intervalle 108. A titre d'exemple, la crépine comprend une pluralité de trous de passage ayant chacun un diamètre de 1mm.

Le fonctionnement de cette soupape de pression différentielle est le suivant. En production, un flux continu de gaz de perméation se diffuse au travers du chemisage 12 et remplit notamment l'intervalle annulaire 108 ménagé entre la surface interne de la bague interne 4 des pièces de jonction 2 et le chemisage. Ce gaz de perméation passe au travers de la crépine 130 de chaque soupape de pression différentielle et remplit la chambre d'admission 106a de celle-ci. Lorsque la pression à l'intérieur de la chambre d'admission dépasse la pression de seuil Ps prédéterminée, le piston 110 se déplace en position d'ouverture de sorte à permettre aux gaz de perméation de pénétrer dans la chambre de refoulement 106b, puis d'emprunter les perçages 118 de la vis de tarage 112 pour traverser le filtre 122 et la membrane osmotique 124 et ainsi être évacués à l'extérieur dans le milieu ambiant (i.e. l'eau de mer).

Dans l'exemple décrit précédemment, la pièce de jonction dans laquelle sont positionnées les soupapes de pression différentielle selon l'invention est une pièce de jonction pour conduite sous-marine à double enveloppe.

Bien entendu, les soupapes de pression différentielle selon l'invention peuvent également être montées sur des pièces de jonction pour conduite sous-marine à simple enveloppe, comme la pièce de jonction 2' illustrée en perspective par la figure 5.

De façon connue, cette pièce de jonction 2' est une pièce de révolution centrée sur un axe de révolution X-X. Elle comprend notamment une bague 4' qui est destinée à venir se raccorder à des extrémités de deux éléments unitaires de la conduite à simple enveloppe, cette bague présentant un diamètre correspondant sensiblement au diamètre des éléments unitaires de la conduite sur lesquels elle est assemblée par soudage.

La pièce de jonction 2' comprend également un chemisage annulaire 12' en matière plastique qui recouvre la surface interne de la bague 4', ce chemisage recevant les fluides d'hydrocarbures sous pression à transporter.

Enfin, au niveau de la partie centrale 10' de la bague 4', la pièce de jonction 2' comprend en outre une bride de limitation de propagation d'écrasement 14' (« buckle arrestor ») qui fait saillie radialement vers l'extérieur. Cette bride 14' forme ainsi une surépaisseur locale qui sert à limiter le risque d'une propagation d'un écrasement de la conduite sous l'effet des instabilités de forme des sections de conduite entraînées par la pression hydrostatique extérieure de l'eau de mer.

Comme pour la pièce de jonction décrite en liaison avec les figures 1 à 3, la bride de limitation de propagation d'écrasement 14' de la pièce de jonction 2' est munie de soupapes de pression différentielle 100 selon l'invention qui sont destinées chacune à assurer une évacuation vers l'extérieur des gaz de perméation se diffusant au travers du chemisage 12'.

La disposition au sein de la bride 14' et les caractéristiques de ces soupapes de pression différentielle 100 sont en tous points identiques à celles décrites précédemment en liaison avec les figures 1 à 4.

## Revendications

1. Pièce de jonction (2; 2') pour conduite sous-marine de transport de fluides, comprenant :
une bague (4; 4') destinée à venir se raccorder à des extrémités de deux éléments unitaires de conduite ;
une bride (14; 14') de limitation de propagation d'écrasement faisant saille radialement vers l'extérieur depuis la bague ; et
au moins trois soupapes de pression différentielle (100) positionnées radialement au sein de la bride, chaque soupape de pression différentielle comprenant :
un corps de soupape (102) à l'intérieur duquel est ménagée une chambre interne (106) s'ouvrant d'un côté vers la conduite à l'intérieur de laquelle règne une pression interne Pi et débouchant d'un autre côté vers l'extérieur des éléments unitaires de conduite où règne une pression extérieure Pe ;
un piston (110) disposé dans la chambre interne de façon à départager la chambre interne en une chambre d'admission (106a) communiquant avec l'intérieur de la conduite et une chambre de refoulement (106b) communiquant avec l'extérieur, le piston étant mobile entre une position d'ouverture dans laquelle les chambres d'admission et de refoulement communiquent entre elles et une position de fermeture dans laquelle les chambres d'admission et de refoulement sont étanches l'une par rapport à l'autre ;
une vis de tarage (112) vissée dans le corps de soupape et comprenant un alésage (114) à l'intérieur duquel coulisse une tige (116) du piston (110) et au moins un perçage (118) débouchant dans la chambre de refoulement et s'ouvrant vers l'extérieur ; et
un ressort (120) positionné entre le piston et la vis de tarage, ledit ressort étant taré de sorte à maintenir le piston en position de fermeture en-dessous d'une pression de seuil prédéterminée à l'intérieur de la chambre d'admission.

2. Pièce de jonction selon la revendication 1, dans laquelle les perçages (118) de la vis de tarage (112) débouchent vers l'extérieur au travers d'un filtre (122) destiné à retenir des impuretés provenant de l'extérieur.

3. Pièce de jonction selon la revendication 2, dans laquelle le filtre (122) débouche vers l'extérieur au travers d'une membrane (124) maintenue en position à l'aide d'un ressort (126) travaillant en compression.

4. Pièce de jonction selon l'une quelconque des revendications 1 à 3, dans laquelle la chambre d'admission (106a) communique avec l'intérieur de la conduite par l'intermédiaire d'une canalisation (128).

5. Pièce de jonction selon la revendication 4, dans laquelle la canalisation (128) débouche à une extrémité dans la chambre d'admission et s'ouvre à une extrémité opposée à l'intérieur de la conduite par l'intermédiaire d'une crépine (130).

6. Pièce de jonction selon l'une quelconque des revendications 1 à 5, dans laquelle la chambre interne (106) de chaque soupape s'ouvre d'un côté à l'intérieur de la bague et débouche d'un autre côté vers l'extérieur de la bride.

7. Pièce de jonction selon la revendication 6, dans laquelle la chambre interne (106) de chaque soupape s'ouvre d'un côté à l'intérieur de la bague au travers d'un chemisage (12 ; 12') en matière plastique.

8. Pièce de jonction selon l'une quelconque des revendications 1 à 7, dans laquelle les soupapes sont régulièrement espacées les unes des autres autour d'un axe de révolution (X-X) de la bride.

9. Pièce de jonction (2) selon l'une quelconque des revendications 1 à 7, dans laquelle la bague (4) est une bague interne destinée à venir se raccorder à des extrémités de deux éléments unitaires d'une enveloppe interne de conduite, la pièce de jonction comprenant en outre une bague externe (6) disposée autour de la bague interne en lui étant coaxiale et destinée à venir se raccorder à des extrémités de deux éléments unitaires d'une enveloppe externe de conduite, la bride (14) faisant saillie radialement vers l'extérieur depuis la bague externe.

## Patentansprüche

1. Verbindungsstück (2; 2') für eine unterseeische Leitung für den Transport von Fluiden, umfassend:
einen Ring (4; 4'), der dazu bestimmt ist, mit den Enden von zwei Einheits-Leitungselementen verbunden zu werden,
einen Flansch (14; 14') zur Begrenzung der Ausbreitung der Quetschung, der von dem Ring radial nach außen wegragt, und
zumindest drei Differenzdruckventile (100), die radial innerhalb des Flansches positioniert sind, wobei jedes Differenzdruckventil umfasst:
einen Ventilkörper (102), innerhalb dessen eine Innenkammer (106) angeordnet ist, die sich auf einer Seite zu der Leitung hin öffnet und innerhalb welcher ein Innendruck Pi herrscht, und die auf einer anderen Seite zur Außenseite der Einheits-Leitungselemente hin mündet, wo ein Außendruck Pe herrscht,
einen Kolben (110), der in der Innenkammer auf solche Weise angeordnet ist, dass er die Innenkammer in eine Einlasskammer (106a), welche mit dem Inneren der Leitung kommuniziert, und eine Entlastungskammer (106b), die mit der Außenseite kommuniziert, unterteilt, wobei der Kolben zwischen einer Öffnungsstellung, in welcher die Einlasskammer und die Entlastungskammer miteinander kommunizieren, und einer Schließstellung, in welcher die Einlasskammer und die Entlastungskammer relativ zueinander abgedichtet sind, beweglich ist,
eine Justierschraube (112), die in den Ventilkörper eingeschraubt ist und eine Bohrung (114), innerhalb welcher eine Stange (116) des Kolbens (110) gleitet, und zumindest eine Bohröffnung (118) umfasst, die in die Entlastungskammer mündet und sich nach außen öffnet, und
eine Feder (120), die zwischen dem Kolben und der Justierschraube positioniert ist, wobei die Feder auf solche Weise eingestellt ist, dass der Kolben unterhalb eines vorbestimmten Schwellendrucks im Inneren der Einlasskammer in der Schließstellung gehalten wird.

2. Verbindungsstück nach Anspruch 1, wobei die Bohröffnungen (118) der Justierschraube (112) über einen Filter (122), der dazu bestimmt ist, von außen stammende Verunreinigungen zurückzuhalten, nach außen münden.

3. Verbindungsstück nach Anspruch 2, wobei der Filter (122) über eine Membran (124) nach außen mündet, die mithilfe einer Feder (126), die unter Kompression arbeitet, in Stellung gehalten wird.

4. Verbindungsstück nach einem der Ansprüche 1 bis 3, wobei die Einlasskammer (106a) mit dem Inneren der Leitung mittels einer Kanalisierung (128) kommuniziert.

5. Verbindungsstück nach Anspruch 4, wobei die Kanalisierung (128) an einem Ende in die Einlasskammer mündet und sich an einem entgegengesetzten Ende mittels eines Siebs (130) zur Innenseite der Leitung hin öffnet.

6. Verbindungsstück nach einem der Ansprüche 1 bis 5, wobei die Innenkammer (106) eines jeden Ventils sich auf einer Seite zur Innenseite des Rings hin öffnet und auf einer anderen Seite zur Außenseite des Flansches hin mündet.

7. Verbindungsstück nach Anspruch 6, wobei die Innenkammer (106) eines jeden Ventils sich auf einer Seite über eine Auskleidung (12; 12') aus Kunststoffmaterial zur Innenseite des Rings hin öffnet.

8. Verbindungsstück nach einem der Ansprüche 1 bis 7, wobei die Ventile um eine Drehachse (X-X) des Flansches herum regelmäßig voneinander beabstandet sind.

9. Verbindungsstück (2) nach einem der Ansprüche 1 bis 7, wobei der Ring (4) ein innerer Ring ist, der dazu bestimmt ist, mit den Enden von zwei Einheits-Elementen eines Innenmantels der Leitung verbunden zu werden, wobei das Verbindungsstück ferner einen äußeren Ring (6) umfasst, der um den inneren Ring herum angeordnet ist, wobei er mit diesem koaxial und dazu bestimmt ist, mit den Enden von zwei Einheits-Elementen eines Außenmantels der Leitung verbunden zu werden, wobei der Flansch (14) radial von dem äußeren Ring nach außen wegragt.

## Claims

1. A junction part (2; 2') for an undersea fluid transport pipe, the junction part comprising:
- a sleeve (4; 4') for connecting to the ends of two unit pipe elements;
- a buckle arrestor flange (14; 14') projecting radially outwards from the sleeve; and
- at least three differential pressure valves (100) positioned radially within the flange, each differential pressure valve comprising:
- a valve body (102) having arranged therein an internal chamber (106) open at one end to the pipe within which there exists an internal pressure Pi, and open at another end to the outside of the unit pipe element where there exists an outside pressure Pe;
- a piston (110) arranged in the internal chamber so as to subdivide the internal chamber into an admission chamber (106a) communicating with the inside of the pipe and a discharge chamber (106b) communicating with the outside, the piston being movable between an open position in which the admission chamber and the discharge chamber communicate with each other, and a closed position in which the admission chamber and the discharge chamber are sealed from each other;
- a rating screw (112) screwed into the valve body and including a bore (114) within which there slides a rod (116) of the piston (110) together with at least one hole (118) opening out into the discharge chamber and open to the outside; and
- a spring (120) positioned between the piston and the rating screw, said spring being rated so as to keep the piston in the closed position below a predetermined threshold pressure inside the admission chamber.

2. A junction part according to claim 1, wherein the holes (118) in the rating screw (112) open to the outside via a filter (122) for the purpose of retaining impurities coming from the outside.

3. A junction part according to claim 2, wherein the filter (122) opens to the outside through a membrane (124) held in position by means of a spring (126) working in compression.

4. A junction part according to any one of claims 1 to 3, wherein the admission chamber (106a) communicates with the inside of the pipe via a duct (128).

5. A junction part according to claim 4, wherein the duct (128) opens out at one end into the admission chamber and opens out at an opposite end into the inside of the pipe via a strainer (130).

6. A junction part according to any one of claims 1 to 5, wherein the internal chamber (106) of each valve opens out at one end to the inside of the sleeve and opens out at another end to the outside of the flange.

7. A junction part according to claim 6, wherein the internal chamber (106) of each valve opens out at one end to the inside of the sleeve through a liner (12; 12') made of plastics material.

8. A junction part according to any one of claims 1 to 7, wherein the valves are regularly spaced apart from one another around an axis of revolution (X-X) of the flange.

9. A junction part (2) according to any one of claims 1 to 7, wherein the sleeve (4) is an inner sleeve for connecting to the ends of two unit elements of an inner pipe wall, the junction part further comprising an outer sleeve (6) arranged coaxially around the inner sleeve for connecting to the ends of two unit elements of an outer pipe wall, the flange (14) projecting radially outwards from the outer sleeve.
